Europäisches Patentamt

European Patent Office

Office européen des brevets

(11) Publication number: **0 118 193 B1**

## EUROPEAN PATENT SPECIFICATION

(45) Date of publication of patent specification: **29.01.92** (51) Int. Cl.⁵: **B01J 29/38**, B01J 21/20

(21) Application number: **84300582.8**

(22) Date of filing: **30.01.84**

(54) **Regeneration of deactivated catalysts.**

(30) Priority: **04.02.83 GB 8303051**

(43) Date of publication of application:
**12.09.84 Bulletin 84/37**

(45) Publication of the grant of the patent:
**29.01.92 Bulletin 92/05**

(84) Designated Contracting States:
**BE DE GB NL**

(56) References cited:
EP-A- 0 009 894     EP-A- 0 076 034
EP-A- 0 085 234     EP-A- 0 150 558
BE-A- 764 917        DE-B- 1 276 009
FR-A- 2 245 587     US-A- 3 384 667
US-A- 3 720 715

(73) Proprietor: **IMPERIAL CHEMICAL INDUSTRIES PLC**
**Imperial Chemical House, Millbank**
**London SW1P 3JF(GB)**

(72) Inventor: **Tompsett, Alan John**
**11 Branksome Grove**
**Hartburn Stockton-on-Tees Cleveland(GB)**
Inventor: **Stewart, Allan**
**18 Springbourne**
**Frodsham Cheshire(GB)**

(74) Representative: **Chapman, Kenneth Hazel et al**
**Imperial Chemical Industries PLC Legal Department: Patents P.O. Box 6 Bessemer Road**
**Welwyn Garden City Herts, AL71HD(GB)**

Rank Xerox (UK) Business Services

## Description

THE PRESENT INVENTION relates to the regeneration of deactivated catalysts used in amines manufacturing processes.

Acidic oxide catalysts are commonly used in the production of amines by amination of alcohols or ethers using ammonia or primary or secondary amines. For example, various silica-aluminas have been used extensively for many years for the production of mixtures of methylamines from methanol and ammonia. This type of catalyst, under appropriate conditions (typically 350-450°C, 10-25 bar) and using excess ammonia, will generally give high conversions, excellent yields and products of high purity. Catalysts for this process are usually used in the form of pellets in fixed bed reactors but other variants are possible.

One of the most significant defects of such catalysts in this process, is a tendency for excessive coke deposition in the catalyst bed. The precise mechanism of this is ill-defined, but the general effect is a gradual decrease in catalytic activity. This in turn causes a fall in conversion levels unless corrective steps are taken, such as decreasing feed rates or increasing bed temperatures, both of which however will add to process costs. Furthermore either of these steps tends to exacerbate the problem by causing accelerated coking.

Coke laydown also has other undesirable effects. Deposition inside the pores of the catalyst pellet may weaken it giving rise to dust or small fragments, which may accumulate in the lower parts of the catalyst bed adversely affecting flow of reactants, or foul pumps or reboiler tubes in the product separation stages of the process plant. Extreme levels of laydown inside the pellet will cause it to swell and fracture giving rise to increased pressure drop, inferior heat and mass transfer between vapour and active sites in the catalyst and local hot spots. These and other problems relating to coke deposition will be familiar to many plant operators.

The deposition of coke is also correlated with a gradual deterioration in catalyst selectivity. Old catalyst generates more by-product leading to lower raw material efficiency as well as deterioration in distillation separation efficiency, deterioration in product quality and a rise in effluent levels. All of these may be overcome by suitable operating or equipment changes, but cumulatively cause significant operating nuisance and economic loss.

The ultimate result of coke deposition is, of course, premature catalyst failure, either because of inadequate catalytic activity or due to excessive pressure drop in the bed. In extreme cases swelling caused by coking may eliminate the space above the bed and generate pressure on reactor walls, tubes or catalyst-retaining trays depending on the type of reactor design.

The gradual loss in activity associated with coking will, in normal commercial practice, result in a gradual increase in bed temperatures to maintain conversion levels. This will have a direct effect on selectivity. The increased temperature will lead to extra generation of light ends (in methanol amination for example, increased methane production) thereby decreasing the raw material efficiency and, because of the large exothermicity of hydrocarbon-forming reactions, increasing the chance of hot-spots or, in extreme cases, temperature runaways in the catalyst bed.

In the case of crystalline aluminosilicates (zeolites) problems arising from coke deposition can be even more wide-ranging and deleterious. It is well-authenticated that amorphous silica-aluminas can tolerate relatively large quantities of coke without catastrophic loss of catalyst activity, selectivity or pellet integrity. Coke levels of up to 35% or more by weight have been found in pellets which nevertheless retained some amination activity, and levels of 5-20% are not exceptional. Many zeolites, however, are much less tolerant of coke deposition, especially those with small pores which have recently attracted particular attention for the methanol amination process because of their ability to generate good yields of monomethylamine (MMA) and dimethylamine (DMA), without concomitant production of excessive amounts of trimethylamine (TMA).

Our co-pending European patent application No 82 304482.1 published as European Patent Application No 76034A and our co-pending European Patent Application No. 83 306236.7 are examples of such processes. It has now been proved that the especially deleterious effects that may arise from coke deposition in zeolite catalysts is due to laydown inside the lattice structure. The effects may in fact totally negate the product ratio selectivity that represents a major reason for using a zeolite catalyst. Rapid partial or total blocking of the micro-pores may occur resulting in rapid loss of activity, and, because of its effect on diffusion of reactants into the cages, to total loss of product-ratio selectivity since only unselective surface sites may continue to be able to participate in the reaction. In short, a coked-up zeolite may behave like a low surface area amorphous silica-alumina catalyst (and be as economically useless).

There will also be an adverse effect on the product ratio if reactor temperatures are raised to counter the falling conversion. In the case of methanol amination over DMA-selective zeolite or layer silica-aluminas, high temperatures will give increased production of TMA because the product ratio of mono: di: alkylamine is strongly temperature dependent. This extra production of TMA, which is the product least desired in the market, will usually need to be recycled to the reactor requiring unprofitable extra energy input and increasing the reactor loading with the relatively inert TMA.

There have been a number of prior proposals which attempt to deal with problems of catalyst coking. These proposals have usually been of two types: (a) those in which it is accepted that coking will occur and which have related to methods for removal of the coke and restoration of catalyst activity, and (b) those which have attempted to delay the onset of coking and/or inhibit or prevent its formation.

It is known from German Auslegeschift 1,276,009 that hydrocracking catalysts which comprise certain zeolites which have pore openings of 6 to 15A and metals or compounds of the platinum group can be regenerated by contact with hydrogen at a temperature 315 to 538°C.

EP-A-9894 discloses that in converting organic compounds involving reactions such as alkylation, disproportionation, isomerisation, cracking, polymerisation, aromatisation, etc in which a catalyst comprising a crystalline aluminosilicate zeolite having a silica to alumina mole ratio of at least 12, a constraint index in the range 1 to 12 and particular xylene sorption characteristics conducive to para selectivity, the catalyst aged during conversion. Ageing has been attributed to the deposition of coke which forms during the conversion reaction and covers the active sites of the catalyst thereby reducing its activity which in turn results in lower conversion.

The catalysts were regenerated by exposing them to a hydrogen-containing atmosphere at 425 to 600°C and 1 to 139 bar (0 to 2000 psig).

A recent proposal of type (b) is contained in European Patent Application No 62428 in which it is proposed to operate the methanol amination process using a silica-alumina catalyst containing between 87 and 99% alumina in contrast to the more usual catalyst which contains much smaller amounts of alumina.

The present invention comprises a method for removing coke from a deactivated or partially deactivated silica, alumina, silica-alumina or aluminosilicate catalyst which is substantially free from platinum group metals and compounds thereof from an amination process in which an alcohol or an ether is aminated using ammonia or a primary or a secondary amine which method comprises burning off the coke in the presence of a stream comprising hydrogen or hydrogen and ammonia.

If desired, said gas stream may also contain an inert diluent, for example nitrogen.

Optionally, the use of hydrogen is followed by mild calcination at moderate temperature with a stream of air, optionally mixed with nitrogen or other inert gas.

Preferred conditions for the method of this invention include the use for the hydrogen treatment of temperatures in the range 300°C to 450°C. Optionally, increased pressure may be used. The optional treatment with air carried out after the hydrogen treatment is preferably carried out at 250 to 400°C.

The Applicants believe that the benefits of this invention are most likely to be obtained if the level of hydrogen in the gas stream used for burning off the coke is of the order of at least 5% by volume, although it is possible that in some circumstances some benefit will still be obtained at lower levels of hydrogen than this.

It is well-known that coke removal by air oxidation is feasible with silica-alumina catalyst but it is difficult to achieve beneficially, especially with zeolite catalysts, because the high temperatures needed to remove the coke may cause structural damage to the catalyst. We have found that the method of this invention, because it allows lower temperatures to be used, is less damaging to the catalyst, thereby enhancing the activity of the regenerated catalyst.

The catalyst used in the process of this invention is suitably selected from silica, alumina, silica-alumina and aluminosilicate catalysts. The Applicants have found that the presence of hydrogen is particularly valuable when a zeolite is used as the catalyst. The extent of coke inhibition is different for different catalysts but we have found that the effect is most marked for those catalysts with an inherently greater tendency to lay down coke. The effect is generally most significant also under process conditions that encourage coke deposition, for example high catalyst temperatures and low ammonia/alcohol ratios.

The following Example further illustrates the invention.

Example 1

A sample of 300g of 5A zeolite methylamines catalyst which had been operated for over 1000 hours had decayed in activity such that conversion had fallen to approx. 89.7%. This was placed in a 2.54 cm (1") tubular reactor and treated with hydrogen at a rate of 80 litres/hour at 365°C and 18 bar pressure for 28 hours. At the end of this period it was retested for methanol amination under identical conditions to those immediately before reactivation. Conversion increased to 95.1%. The molar product split (Mono: Di: Tri:) also reflected the increased activity, changing from 50:41.5:8.5 before reactivation to 47:42.5:10.5 afterwards.

## Claims

1. A method for removing coke from a deactivated or partially deactivated silica, alumina, silica-alumina or aluminosilicate catalyst which is substantially free from platinum group metals and compounds thereof from an amination process in which an alcohol or ether is aminated using ammonia or a primary or a secondary amine, which method comprises burning off the coke in the presence of a stream comprising hydrogen or hydrogen and ammonia at a temperature in the range 300 to 450°C.

2. A method as claimed in claim 1 in which, following the burning off step, the catalyst is subjected to a mild calcination with a stream of air.

3. A method as claimed in claim 2 in which the calcination is carried out at a temperature in the range 250 to 400°C.

4. A process as claimed in any preceding claim in which the catalyst is a zeolite.

5. A process as claimed in claim 4 in which the zeolite has a pore size of 5Ä.

6. A process as claimed in claim 1 in which the coke is burnt off in a stream of hydrogen and ammonia.

## Revendications

1. Procédé pour éliminer le coke d'un catalyseur de silice, d'alumine, de silice-alumine ou d'aluminosilicate désactivé ou partiellement désactivé qui est sensiblement exempt de métaux du groupe du platine et de leurs composés au sortir d'un procédé d'amination au cours duquel un alcool ou un éther est aminé au moyen d'ammoniac ou d'une amine primaire ou secondaire, lequel procédé comprend la combustion du coke en présence d'un courant comprenant de l'hydrogène ou de l'hydrogène et de l'ammoniac à une température de l'intervalle de 300 à 450°C.

2. Procédé suivant la revendication 1, dans lequel, après le stade de combustion, le catalyseur est soumis à une calcination modérée dans un courant d'air.

3. Procédé suivant la revendication 2, dans lequel la calcination est exécutée à une température de l'intervalle de 250 à 400°C.

4. Procédé suivant l'une quelconque des revendications précédentes, dans lequel le catalyseur est une zéolite.

5. Procédé suivant la revendication 4, dans lequel la zéolite a une dimension des pores de 5 Å.

6. Procédé suivant la revendication 1, dans lequel le coke est brûlé dans un courant d'hydrogène et d'ammoniac.

## Patentansprüche

1. Verfahren zum Entfernen von Koks von einem deaktivierten oder teilweise deaktivierten Siliciumdioxid-, Aluminiumoxid-, Siliciumdioxid-Aluminiumoxid- oder Aluminiumsilikat-Katalysator, welcher im wesentlichen frei ist von Metallen der Platingruppe und deren Verbindungen, aus einem Aminierungsverfahren, bei dem ein Alkohol oder ein Ether mit Ammoniak oder einem primären oder einem sekundären Amin aminiert wird, dadurch gekennzeichnet, daß das Verfahren das Verbrennen des Kokses in Gegenwart eines Stromes, welcher Wasserstoff oder Wasserstoff und Ammoniak enthält, bei einer Temperatur im Bereich von 300 bis 450°C umfaßt.

2. Verfahren nach Anspruch 1, dadurch gekennzeichnet, daß der Katalysator auf den Verbrennungsschritt folgend einer milden Kalzinierung mit einem Luftstrom unterzogen wird.

3. Verfahren nach Anspruch 2, dadurch gekennzeichnet, daß die Kalzinierung bei einer Temmperatur im Bereich von 250 bis 400°C durchgeführt wird.

4. Verfahren nach einem der vorhergehenden Ansprüche, dadurch gekennzeichnet, daß der Katalysator ein Zeolith ist.

5. Verfahren nach Anspruch 4, dadurch gekennzeichnet, daß der Zeolith eine Porengröße von 5 Å aufweist.

6. Verfahren nach Anspruch 1, dadurch gekennzeichnet, daß der Koks in einem Strom von Wasserstoff und Ammoniak verbrannt wird.